# EUROPÄISCHE PATENTSCHRIFT

(11) **EP 2 629 458 B1**
(45) Veröffentlichungstag und Bekanntmachung des Hinweises auf die Patenterteilung: **22.01.2020**
(21) Anmeldenummer: 12196637.8
(22) Anmeldetag: 12.12.2012
(51) Int. Cl.: G08C 17/02, H04L 12/28, H04L 12/12

(54) **Heimautomatisierungssteuerungssystem sowie ein Verfahren zur Steuerung einer Heimautomatisierung**
Home automation control system and a method for controlling a home automation system
Système de commande de domotique et procédé de commande d'un système domotique

(30) Priorität: 15.02.2012 DE 102012002802
(43) Veröffentlichungstag der Anmeldung: 21.08.2013
(73) Patentinhaber: Lemonbeat GmbH, 44339 Dortmund (DE)
(72) Erfinder: Lux, Daniel, 9520 Skorping (DK); Westermeier, Dr. Michael, 44789 Bochum (DE); Reinelt, Dr. Jens, 44797 Bochum (DE)
(74) Vertreter: Cohausz & Florack

(56) Entgegenhaltungen:
- EP-A1- 1 657 852
- EP-A1- 1 933 507
- EP-A2- 1 473 870
- WO-A1-2011/088909
- DE-A1- 19 600 922

## Beschreibung

Der Gegenstand betrifft ein Heimautomatisierungssteuerungssystem sowie ein Verfahren zur Steuerung einer Heimautomatisierung.

Systeme zur Heimautomatisierung sind hinlänglich bekannt. So ist zum Beispiel unter der Bezeichnung EIB/KNX ein kabelgebundenes Heimautomatisierungssystem bekannt, bei dem über einen seriellen Bus Nachrichten zwischen Sensoren und Aktoren ausgetauscht und entsprechend vorgebbarer Regeln (Parameter) elektrische Verbraucher gesteuert werden. Ein solches Bussystem erfordert jedoch eine aufwändige Verkabelung, die fast ausschließlich bei einem Neubau realisierbar ist.

Bei der Nachrüstung von Heimautomatisierungslösungen in bestehende Elektroinstallationen eignen sich insbesondere funkbetriebene Lösungen. Hierbei kommunizieren Sensoren und Aktoren sowie ggf. zentrale Steuerrechner über Hochfrequenzfunk. Die im Nachfolgenden beschriebenen Sensoren und Aktoren können jeweils Sender oder Empfänger einer Kommunikationsnachricht sein. Vorzugsweise ist jedoch ein Sensor ein Sender einer Kommunikationsnachricht und ein Aktor ein Empfänger einer Kommunikationsnachricht.

Da bei der Nachrüstung jedoch an vielen Stellen, an denen Sensoren oder Aktoren eingesetzt werden, keine Stromversorgung vorhanden ist, sind zumindest energetisch eigengespeiste Sensoren (z.B. mittels Batterien, Kondensatoren, etc.) notwendig. Bei den eigengespeisten Geräten ist der Stromverbrauch jedoch ein entscheidendes Kriterium für die Dauer des Betriebs des Geräts mit einer einzigen Batterie. Sensoren, die ununterbrochen mit Aktoren und zentralen Steuerrechnern kommunizieren oder in regelmäßigen Abständen mit den Aktoren bzw. den zentralen Steuerrechnern kommunizieren, verbrauchen unnötig viel Strom.

Nachteilig bei bekannten Systemen ist, dass die Stromaufnahme und daher die benötigte Energie zum Betrieb eines Funkempfängers so hoch ist, dass dieser bei batteriebetriebenen Geräten nicht permanent eingeschaltet bleiben kann. Dies gilt insbesondere bei Geräten, bei denen eine möglichst lange Batterielebensdauer gewünscht wird, häufig mehrere Jahre und insbesondere bei Geräten mit Funkdatenübertragung für die Frequenzbänder bei 2,4 GHz, bei 868 MHz und 433 MHz.

Eine der simpelsten Lösungen ist, dass der Empfänger den Sender bzw. das initiierende Gerät in einem festen oder variablen Intervall fragt, ob Daten zu senden sind. Dies wird als Polling bezeichnet. Dabei wird eine erhebliche Energie beim Empfänger für das Polling benötigt und zusätzlich erhöht die Intervalldauer die Latenzzeit für eine spontane Datenübertragung vom Sender zum Empfänger.

Die Veröffentlichungen DE 10 2006 034 066 A1 und DE 10 2006 034 063 A1 zeigen darüber hinaus, wie die erheblichen Nachteile einer solchen zyklischen Datenübertragung mit einem festen Zeitintervall vermieden werden können und wie eine für nicht an der Kommunikation beteiligte Geräte pseudo-zufällige Intervalldauer erreicht werden kann.

Eine andere Form der Organisation der Kommunikation ist die Verwendung eines Geräts, das in zeitlich konstanten Abständen einen "Beacon" aussendet. Ein Beacon ist ein besonderes, per Funk übertragenes Datenpaket einer zentralen Station, auf das sich alle beteiligten batteriebetriebenen Funkdatenempfänger synchronisieren. Die Kommunikation zwischen den Geräten wird dann immer unmittelbar nach dem Empfang des Beacons nach einem der bekannten Verfahren zur Koordination des Kanalzugangs - z.B. CSMA/CA - durchgeführt. Geräte, welche die Synchronität verlieren, können durch dauerhaftes Einschalten ihres Empfängers bis zum Eintreffen des nächsten Beacons wieder synchronisiert werden. Der Nachteil des Beacons ist aber ebenso offensichtlich: Es ist ein in der Reichweite von allen Empfängern liegender Beacon-Sender - oft auch "Master" genannt - notwendig.

Aber auch bei diesen Lösungen ist eine spontane Datenübertragung zum energetisch eigengespeisten Gerät im Mittel stets durch die Intervalldauer zwischen zwei Beacons verzögert.

Aufgrund der genannten Nachteile wurden so genannte "Burst-Wakeup" Verfahren entwickelt. Bei diesen Verfahren wacht ein Empfänger in einem festen zeitlichen Aufwachintervall (Burst-Intervall) für eine sehr kurze Dauer auf, um zu überprüfen, ob ein Sender gerade eine Erkennungsbitfolge (Burst-Präambel), ggf. zusammen mit Nutzdaten (Burst-Wakeup Paket) sendet. Eine Erkennungsbitfolge ist eine Präambel, d.h. eine definierte Bitfolge, z.B. 010101..., vor dem Beginn der eigentlichen Nutzdaten. Bei den bekannten Verfahren ist die Erkennungsbitfolge sehr stark verlängert, um sicherzustellen, dass innerhalb eines Aufwachintervalls vom Empfänger zumindest einen Teil der Erkennungsbitfolge detektiert werden kann.

Sofern der Empfänger innerhalb (zu Beginn, während oder am Ende) des Aufwachintervalls - beim Aufwachen - auf dem Funkkanal keine Burst-Präambel detektiert, wird der RF-Transceiver des Empfängers sofort wieder abgeschaltet, um Energie zu sparen. Der Empfänger wird für die restliche Dauer des Aufwachintervalls in einen Energiesparmodus (Sleep-Modus) versetzt und wacht erst im nächsten Burst-Intervall wieder auf.

Wenn der Empfänger beim Aufwachen eine Burst-Präambel detektiert, bleibt der Empfänger wach, bis die eigentlichen Nutzdaten folgen und empfängt diese. Oft folgen darauf weitere Kommunikationsvorgänge. Das detektieren der Burst-Präambel erfordert empfängerseitig die Detektion der definierten Bitfolge. Hierzu muss nur ein sehr kurzer Abschnitt der Burst-Präambel im Empfänger empfangen werden. Es reicht aus, wenn der Empfänger nur wenige Bits der gesamten Burst-Präambel empfängt, solange der Empfänger anhand dieser Bits feststellen kann, dass es sich hierbei um Teile der gesamten Burst-Präambel handelt.

Wenn nun die Dauer der Burst-Präambel mindestens so lang ist, wie das Aufwachintervall (Burst-Intervall), kann, wenn keine anderen Störungen im Funkkanal auftreten, eine geregelte Kommunikation erfolgen. Dies ist der Fall, weil dann der Empfänger in jedem Fall in einem Burst-Intervall einen Teil der Burst-Präambel empfängt.

Dieses Burst-Verfahren ist von besonderem Interesse, da der durchschnittliche Stromverbrauch aufgrund des nur kurzen regelmäßigen Aufwachens relativ niedrig ist. Aus diesem Grunde finden sich in einschlägigen Implementierungen von Funk-Transceivern bereits Schaltungen, die das Verfahren des Burst-Wakeup automatisch ausführen, d.h. ohne dass der Mikrocontroller des Empfängers seinen Sleep-Modus verlassen muss, bevor ein gültiges Datenpaket mit einer Burst-Präambel empfangen wurde. Dies führt zu weiteren Energieeinsparungen auf der Seite des Empfängers, da die Mikrocontroller des Empfängers nur dann aus dem Sleep-Modus aktiviert wird, wenn der Funk-Transceiver bereits festgestellt hat, dass eine Funkkommunikation mit dem Sender stattfinden soll.

Für viele Applikationen wäre es aber wünschenswert, den durchschnittlichen Stromverbrauch noch weiter zu senken. Hierzu müsste das Burst-Intervall verlängert werden. Dann müsste aber auch die Burst-Präambel zum "Aufwecken" des Empfängers länger werden, um sicherzustellen, dass der Empfänger sicher während eines Burst-Intervalls auch einen Teil der Burst-Präambel detektiert. Dies hätte jedoch einen erhöhten Energieverbrauch im Sender zur Folge. Falls Sender im System vorhanden sind, die energetisch eigengespeist sind, wäre dies nicht wünschenswert.

Ein Nachteil des Burst-Verfahrens ist auch, dass das Burst-Wakeup Paket für unbeteiligte Geräte eine Störung des Funkkanals mit einer Dauer des Burst-Intervalls darstellt. Es ist daher auch wünschenswert, die Dauer des Burst-Pakets zeitlich möglichst eng zu begrenzen, d.h. auch um Kanal-Zugangsverfahren wie CSMA/CA möglichst wenig zu behindern.

Aufgrund dieser Nachteile lag dem Gegenstand die Aufgabe zugrunde, ein Burst-Verfahren zur Verfügung zu stellen, welches sowohl für den Sender als auch für den Empfänger möglichst energiesparend ist.

Diese Aufgabe wird durch ein Heimautomatisierungssteuerungssystem nach Anspruch 1 sowie ein Verfahren zur Heimautomatisierungssteuerung nach Anspruch 14 gelöst.

Zunächst wird vorgeschlagen, dass der Sender, vorzugsweise ein Sensor, ein Kommunikationssignal aussendet, welches von einem Empfänger empfangen werden kann. Der Empfänger ist dabei regelmäßig jedoch in einem Energiesparbetrieb. In diesem Energiesparbetrieb lauscht der Empfänger nur zeitweise auf einem Funkkanal.

Ein Funkkanal kann durch ein bestimmtes Frequenzband bestimmt sein. Ein Funkkanal kann in einem von einer Mehrzahl von definierten Frequenzbändern enthalten sein. Vorzugsweise kann ein Funkkanal ein solcher Kanal sein, der in dem Heimautomatisierungssteuerungssystem zur Synchronisierung von Sender und Empfänger definiert ist. Vorzugsweise können in einem Heimautomatisierungssteuerungssystem zwei bis sechs, vorzugsweise vier, Funkkanäle definiert sein, die zur Synchronisierung verwendet werden. Auch ist es möglich, dass von einem zentralen Steuerrechner zu Beginn einer Installation vorgegeben wird, welche Frequenzbänder als Funkkanäle zur Synchronisierung verwendet werden. Diese Vorgabe kann vorzugsweise während einer Inklusion der Geräte in das Heimautomatisierungssteuerungssystem kommuniziert werden. Eine Inklusion eines Gerätes in ein System zur Heimautomatisierung ist beispielsweise in der DE 10 2009 060 469 sowie der WO 2011/088909 beschrieben.

Es wird auch beansprucht, dass ein Empfänger in einem Energiesparbetrieb zu bestimmten Zeiten bzw. in bestimmten Zeiträumen auf einen Funkkanal lauscht, ob ein Kommunikationssignal für ihn vorhanden ist.

Um nun sicherzustellen, dass sowohl der Sender als auch der Empfänger möglichst wenig Energie verbrauchen, um den Empfänger aus dem Energiesparbetrieb mittels einer Burst-Präambel (Wakeup-Bursts) aufzuwecken, wird vorgeschlagen, dass der Empfänger auf eine Zeitbasis mit dem Sender synchronisiert ist. Der RF-Tranceiver sowohl des Empfängers als auch des Senders ist dabei vorzugsweise auf einen gemeinsamen zeitlichen Nullpunkt synchronisiert. Anschließend wird in den RF-Tranceivern mittels eines Schwingquarzes die Zeit gemessen, die seit dem Nullpunkt vergangen ist. Somit ist sichergestellt, dass sowohl im Sender als auch im Empfänger im Wesentlichen die gleiche Zeit bekannt ist.

Darüber hinaus wird vorzugsweise bei einer Inklusion eines Empfängers in das Heimautomatisierungssteuersystem dem Empfänger eine Information über einen Zeitversatz mitgeteilt. Diese Information über einen Zeitversatz kann entweder von einem zentralen Steuerrechner oder von dem Sender, der mit dem Empfänger kommunizieren soll, bestimmt werden. Vorzugsweise wird der Zeitversatz durch den zentralen Steuerrechner bestimmt und dem Empfänger mitgeteilt. Hierdurch wird der Empfänger entsprechend parametriert. Auch ist es möglich, dass der zentrale Steuerrechner allen Sendern, die mit einem jeweiligen Empfänger kommunizieren sollen, mitteilt, auf welchen Zeitversatz der Empfänger parametriert ist. Somit kennen alle Sender für die ihnen jeweils zugeordneten Empfänger die darin parametrierten Zeitversätze. Dies ermöglicht es den Sendern, zusammen mit Informationen zu dem Zeitversatz, den Wakeup-Burst zu einer bestimmten Zeit auszusenden.

Um sicherzustellen, dass ein solcher Wakeup-Burst von dem Empfänger tatsächlich empfangen wird, wird vorgeschlagen, dass der Empfänger im Energiesparbetrieb nur zu Zeiten auf den Funkkanal lauscht, die zumindest durch die Zeitbasis und den Zeitversatz definiert sind. Hierdurch wird sichergestellt, dass in dem Empfänger bekannt ist, wann dieser auf den Funkkanal lauschen soll. Dieser Zeitpunkt wird definiert zum Einen durch die Zeitbasis und zum Anderen zumindest durch den Zeitversatz. Da auch der Sender die Zeitbasis als auch zumindest den Zeitversatz des entsprechenden Empfängers kennt, kann der Sender einen Wakeup-Burst zeitgenau aussenden. Es ist nicht mehr notwendig, dass der Sender die Burst-Präambel über eine längere Zeit aussendet, insbesondere über ein gesamtes Wakeup-Intervall. Vielmehr reicht es aus, wenn der Sender, der einen bestimmten Empfänger ansprechen und aufwecken möchte, die Burst-Präambel zu genau der Zeit sendet, zu der der Sender weiß, dass der Empfänger auf den Funkkanal lauscht.

Auch wird vorgeschlagen, dass in dem Empfänger ein Intervall parametriert ist. Ein Intervall kann eine Dauer zwischen zwei Zeiten sein, zu denen der Empfänger auf dem Funkkanal lauscht. Vorzugsweise lauscht der Empfänger für eine Dauer von 50µs bis 150µs, vorzugsweise 75 µs bis 115µs, ob ein Kommunikationssignal auf den Funkkanal vorhanden ist. Der Abstand, der zwischen zwei Zeitpunkten liegt, zu denen der Empfänger auf den Funkkanal lauscht, kann durch das Intervall bestimmt sein. Ein Intervall hat vorzugsweise eine Dauer zwischen 1 und 10ms, vorzugsweise 5ms. Ein Intervall kann aber auch deutlich länger sein, z.B. bei Geräten, die nur zeitunkritische Funktionen überwachen. Dies kann z.B. eine Wetterstation sein, die Wetterdaten in Intervallen aussendet.

Ein Empfänger lauscht mindestens einmal pro Intervall auf dem Funkkanal. Hierdurch ergibt sich eine Latenz von maximal der Dauer eines Intervalls, innerhalb deren der Sender einen Befehl an einen Empfänger senden kann. Diese Latenz kann sich erhöhen, wenn bei dem Zugriff des Senders auf den Funkkanal eine Störung auftritt und der Sender auf den Funkkanal nicht zugreifen kann.

Um Kollisionen auf dem Funkkanal zu minimieren, wird vorgeschlagen, dass mehrere Funkkanäle vorhanden sind, auf denen ein Empfänger lauschen kann, um aus dem Energiesparbetrieb mittels einer Burst-Präambel aufgeweckt zu werden. Aus diesem Grunde wird auch vorgeschlagen, dass in einem Empfänger ein Funkkanal parametriert ist. Kennen sowohl Sender als auch Empfänger den Funkkanal, auf dem der jeweilige Empfänger aufgeweckt werden kann, so kann der Sender gezielt auf dem entsprechenden Funkkanal zu der durch die Zeitbasis, den Zeitversatz und/oder das Intervall bestimmten Zeit die Burst-Präambel aussenden. Der Empfänger lauscht lediglich auf diesem Funkkanal und empfängt maximal nach der Dauer eines Intervalls das Kommunikationssignal von dem Sender.

Es kann vorkommen, dass zwischen Sender und Empfänger die Zeitbasis nicht synchronisiert ist oder, dass der Sender keine Informationen über die Zeitbasis des Empfängers, das in dem Empfänger parametrierte Intervall und/oder den in dem Empfänger parametrierten Funkkanal hat. Die ist insbesondere dann der Fall, wenn ein Gerät zum ersten Mal in das Heimnetz eingebunden wird. In einem solchen Fall kann es von Vorteil sein, wenn zunächst zwei fest definierte Funkkanäle im Sender und Empfänger bekannt sind. Diese beiden Funkkanäle können Inklusionskanäle sein. Darüber hinaus können fest definierte Zeitintervalle in den Geräten hinterlegt sein. Zu diesen Zeitintervallen sendet der Sender auf den Inklusionskanälen in den definierten Zeitintervallen Wakeup-Bursts.

Der Sender sendet dabei während der Dauer eines gesamten Intervalls, vorzugsweise während der Dauer von 5ms, eine Burst-Präambel aus. Der Empfänger ist so eingestellt, dass er zumindest innerhalb von einer maximalen Verweildauer z.B. eines Default Intervalls einmal jeden der Inklusionskanäle überprüft. Sendet der Sender dann auf einem dieser Funkkanäle für die gesamte Intervalldauer die Burst-Präambel, wird sichergestellt, dass der Empfänger diese empfangen kann.

Die Empfänger können diese Empfangen und anschließend auf den Inklusionskanälen Parameter austauschen. Die Parameter können Informationen zu zusätzlichen, beispielsweise vier zusätzlichen Funkkanälen enthalten. Ferner kann die Zeitbasis synchronisiert werden und Zeitversatz und Intervall ausgetauscht werden. Im Anschluss sind die Geräte für das gegenständliche Verfahren konfiguriert.

Für den Fall, das ein Empfänger seine Parameter vergessen hat, kann der Empfänger auf den fest definierten Inklusionskanälen den zentralen Steuerrechner anfragen. Hierzu kann der Empfänger eine Burst-Präambel auf diesen Kanälen aussenden. Der zentrale Steuerrechner kann diese Empfangen und über einen der Inklusionskanäle den Empfänger mit den notwendigen Parametern parametrieren.

Gemäß einem vorteilhaften Ausführungsbeispiel wird vorgeschlagen, dass der Empfänger bei einem Detektieren eines Kommunikationssignals beim Lauschen auf dem Funkkanal in einen Funkbetrieb umschaltet. Sobald der Empfänger ein Kommunikationssignal auf einen Funkkanal wahrnimmt, wechselt der Empfänger in einen Funkbetrieb, in dem dieser das auf den Funkkanal ausgesendete Kommunikationssignal auswerten kann. Bei diesem Betrieb ist vorzugsweise der Mikroprozessor des Empfängers aktiviert und der Stromverbrauch ist erhöht.

Um möglichst schnell feststellen zu können, ob das Kommunikationssignal auf dem Funkkanal für den empfangenden Empfänger geeignet ist, wird vorgeschlagen, dass der Empfänger im Funkbetrieb zunächst die Datenrate des Kommunikationssignals prüft. Mit Hilfe der Burst-Präambel lässt sich der PLL des Empfängers auf die Datenrate des Kommunikationssignals einstellen, so dass im Anschluss die Nutzdaten innerhalb des Kommunikationssignals empfangen werden können. Stellt der Empfänger fest, dass das Signal ein Störsignal ist oder bei einer Datenrate ausgesendet wird, die der Empfänger nicht auswerten kann, kann der Empfänger daraus schließen, dass das Kommunikationssignal nicht an ihn adressiert ist und unmittelbar in den Energiesparbetrieb zurückkehren.

Andererseits kann, falls der Empfänger feststellt, dass die Datenrate (Geschwindigkeit) des Signals für ihn geeignet ist, der Empfänger die in dem Kommunikationssignal kodierte Adresse auswerten. Die Adresse ist vorzugsweise in dem auf die Burst-Präambel folgenden Synchronisierungswort enthalten. Dieses ist vorzugsweise verschieden von der Burst-Präambel. Die in dem Kommunikationssignal enthaltene Adresse ist vorzugsweise als Bitfolge kodiert. Die Adresse kann dabei eine MAC-Adresse oder einen Teil einer MAC-Adresse oder eine aus einer MAC-Adresse gebildete Bitfolge sein, wobei die MAC-Adresse diejenige des Empfängers ist. Die MAC-Adresse ist vorzugsweise eine ein-eindeutige Adresse innerhalb des Heimautomatisierungssteuerungssystems.

Mit Hilfe des Synchronisierungswortes ist es auch möglich, dem Empfänger mitzuteilen, wann Nutzdaten innerhalb des Kommunikationssignals enthalten sind.

Das Kommunikationssignal ist vorzugsweise aus der Präambel, gefolgt von dem Synchronisierungswort und anschließend gefolgt von den Nutzdaten, in denen ein Steuerbefehl für den Empfänger enthalten sein kann, gebildet. Auch kann ein Parameter zum Parametrieren des Empfängers in den Nutzdaten enthalten sein.

Gemäß einem Ausführungsbeispiel wird vorgeschlagen, dass der Empfänger bei einer positiven Prüfung der Datenrate des Kommunikationssignals und/oder der in dem Kommunikationssignal kodiert enthaltenen Adresse einen Steuerungsbefehl in dem Kommunikationssignal empfängt und auswertet. Vorzugsweise kann der Sender somit den Empfänger ansteuern und anweisen, eine bestimmte Aktion durchzuführen. In dem Steuerungsbefehl können auch Parameter enthalten sein, mit deren Hilfe der Empfänger für bestimmte Aktionen parametriert werden kann. Auch kann in dem Steuerungsbefehl eine Information enthalten sein, die Parameter Zeitversatz, Intervall und/oder Funkkanal zu ändern und entsprechend geänderte Werte enthalten.

Gemäß einem Ausführungsbeispiel wird vorgeschlagen, dass der Empfänger bei einer negativen Prüfung der Datenrate des Kommunikationssignals und/oder der in dem Kommunikationssignal kodiert enthaltenen Adresse aus dem Funkbetrieb wieder in den Energiesparbetrieb wechselt. Unmittelbar nachdem der Empfänger feststellt, dass einer der genannten Werte für eine weitere Kommunikation mit dem Sender ungeeignet ist, kann der Empfänger in den Energiesparbetrieb wechseln und somit energiesparend betrieben werden.

Gemäß einem Ausführungsbeispiel wird vorgeschlagen, dass der Sender die einem Empfänger zugeordneten Parameter Zeitversatz und/oder Funkkanal und/oder Intervall speichert und abhängig von der Zeitbasis und zumindest einem der Parameter ein Kommunikationssignal aussendet. Bei einer Programmierung und Parametrierung des Heimautomatisierungssteuerungssystems werden in einem zentralen Steuerrechner Sender und Empfänger einander zugeordnet. Hierdurch wird sichergestellt, dass Aktionen und Ereignisse, die an einem Sender detektiert werden, zu entsprechenden Reaktionen und Ereignissen in dem Empfänger führen. Beispielsweise kann ein Sender ein Lichtschalter und ein Empfänger ein Schaltrelais für eine Lampe sein. Der Lichtschalter und das Schaltrelais werden einander zugeordnet. Sobald eine solche Zuordnung stattgefunden hat, kann der Steuerrechnern sowohl dem Sender als auch dem Empfänger geeignete Parameter mitteilen, die es dem Sender ermöglichen, die gegenständliche Burst-Präambel zu der bestimmten Zeit zu senden. Hierdurch wird in dem Sender sichergestellt, dass dieser nur dann, nachdem ein Ereignis festgestellt wurde, den Steuerungsbefehl an den Empfänger sendet, wenn der Sender weiß, dass der Empfänger empfangsbereit ist und aus dem Energiesparbetrieb in den Funkbetrieb wechseln kann. Dieser Zeitpunkt ist definiert durch zumindest den Zeitversatz und die Zeitbasis, kann jedoch ferner durch das Intervall als auch den Funkanal definiert sein.

Wie bereits beschrieben, wird auch vorgeschlagen, dass der Sender die einem Empfänger zugeordneten Parameter Zeitversatz und/oder Funkkanal und/oder Intervall von einem Zentralrechner empfängt. Vorzugsweise empfängt der Sender die Parameter von denjenigen Empfängern, denen er zugeordnet ist.

Die entsprechenden Parameter können ferner von dem Zentralrechner ebenfalls dem Empfänger mitgeteilt werden. Dies kann zum Einen bei der Inklusion des Empfängers in das Heimautomatisierungssteuerungssystem erfolgen. Auch ist es möglich, dass veränderte Parameter einem Empfänger zusammen mit einem Steuerungsbefehl mitgeteilt werden. So ist es beispielsweise möglich, dass ein Empfänger einem anderen Sender zugeordnet wird. Der neue Sender kann von dem Zentralrechner die "alten" Parameter als auch die "neuen" Parameter für den Empfänger empfangen und den ersten Steuerungsbefehl abhängig von den "alten" Parametern aussenden. Das stellt sicher, dass der Empfänger, der noch die "alten" Parameter kennt, das entsprechende Kommunikationssignal empfängt und auswertet. Nach Bestätigung des Empfangs dieses Signals durch den Empfänger an den Sender weiß der Sender, dass der Empfänger auf die neuen Parametern eingestellt ist und kann anschließende Steuerungssignale mit den "neuen" Parametern" aussenden, d.h. zu anderen Zeiten den Wakeup-Burst aussenden. Auch ist es möglich, dass der zuvor mit dem Empfänger verbundene Sender, nachdem diesem mitgeteilt wurde, dass ein neuer Sender mit dem Empfänger verbunden wird, den Empfänger mit den "alten" Parametern aufweckt und diesem mitteilt, dass ein neuer Sender mit dem Empfänger verbunden ist und ihm gegebenenfalls neue Parameter zur Kommunikation mit diesem Sender mitteilt.

Gemäß einem Ausführungsbeispiel wird vorgeschlagen, dass der Empfänger die Zeitbasis und/oder die Parameter bei einer Inklusion in die Kommunikation mit dem Zentralrechner von dem Zentralrechner empfängt. Somit kann unmittelbar nachdem ein Empfänger in das Heimautomatisierungssteuerungssystem eingebunden worden ist, der Empfänger mittels der Zeitbasis und/oder der Parameter aufgeweckt werden. Die entsprechende Information kann anschließend an die dem Empfänger zugeordneten Sender übermittelt werden, so dass diese energiesparend betrieben werden können und zuverlässig die diesen zugeordneten Empfänger kontaktieren können.

Zum energiesparenden Betreiben des Senders ist es notwendig, dass dieser die Burst-Präambel nur dann sendet, wenn der dem Sender zugeordnete Empfänger tatsächlich auf dem entsprechenden Funkkanal lauscht. Aus diesem Grunde muss der Sender gemäß einem Ausführungsbeispiel abhängig von zumindest der Zeitbasis und dem Zeitversatz einen Zeitpunkt bestimmen, zudem er eine Präambel eines Kommunikationssignals aussendet. Diese Zeit wird entsprechend im Empfänger ebenfalls berechnet, so dass Sender und Empfänger zu gleichen Zeitpunkten senden bzw. lauschen und ein zuverlässiges Aufwecken des Empfängers ermöglichen.

Es ist bekannt, dass in RF-Tranceivern die Zeit mittels Schwingquarzen ermittelt wird. Dies geschieht mittels elektronischer Komponenten, die alters- und/oder temperaturbedingt ihre elektronischen und elektrischen Eigenschaften ändern können, so dass bei der Bestimmung der Zeit eine Zeitschwankung entstehen kann. Um dieser Zeitschwankung entgegenzuwirken, wird vorgeschlagen, dass der Sender die ausgesendete Präambel um den bestimmten Zeitpunkt herum aussendet. Ein maximaler Zeitversatz kann aus den in einem Empfänger bzw. Sender verwendeten elektronischen Komponenten bestimmt werden. Die Zeitschwankung ist ein sogenannter Jitter. Dieser kann in der Größenordnung von Millisekunden liegen. Vorzugsweise wird die Präambel für die Dauer des Jitters vor als auch nach dem von dem Sender bestimmten Zeitpunkt ausgesendet, um sicherzustellen, dass auch bei einem Zeitversatz zwischen dem Sender und dem Empfänger, der durch verwendete Bauteile bedingt ist, sichergestellt ist, dass die Präambel durch den Empfänger beim Lauschen zu der bestimmten Zeit detektierbar ist.

Um Kollisionen auf Funkkanälen und zu bestimmten Zeiten zu verhindern, wird vorgeschlagen, dass zumindest zwei Empfänger, vorzugsweise Empfänger die funktional gemeinsam angesprochen werden sollten, einer gemeinsamen Gruppe zugeordnet werden. Dies kann durch den Zentralrechner erfolgen. Empfänger einer Gruppe können gleiche Parameter wie Zeitversatz und/oder Funkkanal und/oder Intervall aufweisen. Dies bedeutet, dass Empfänger einer Gruppe zumindest teilweise die gleichen Parameter haben, die das Lauschen auf dem Funkkanal im Energiesparmodus bestimmen.

Auch wird vorgeschlagen, dass der Sender Informationen zu der einem Empfänger zugeordneten Gruppe und/oder die einer Gruppe zugeordneten Parameterzeitversatz und/oder Funkkanal und/oder Intervall von einem Zentralrechner empfängt. Auch der Sender kann somit Kenntnis über die Gruppe haben, welcher der Empfänger zugeordnet ist.

Wie eingangs bereits erläutert, eignet sich das beschriebene System vorzugsweise für Empfänger und/oder Sender, die akkumulatorgespeist sind. Akkumulatorgespeist bedeutet, dass die Geräte energetisch eigengespeist sind. Ein Akkumulator kann eine Batterie, eine aufladbare Batterie, ein Kondensator oder dergleichen sein. Gerade bei solchen Geräten ist ein Energiesparmodus von besonderer Bedeutung. Anders als bei herkömmlichen Verfahren ist jedoch auch die Burst-Präambel zeitlich derart genau bestimmt, dass der Sender nur zu sehr kurzen Zeiten auf dem Funkkanal die Kommunikationssignale aussenden muss und gleichzeitig sichergestellt ist, dass der Empfänger die entsprechenden Kommunikationssignale empfängt.

Gemäß einem Ausführungsbeispiel wird vorgeschlagen, dass die Zeitbasis des Empfängers und/oder eines Senders zumindest bei einer Inklusion des jeweiligen Kommunikationspartners in die Kommunikation mit dem Zentralrechner synchronisiert wird. Das heißt, dass der Zentralrechner vorzugsweise die Zeitbasis vorgibt und diese Information bereits bei der Inklusion der jeweiligen Geräte in das System diesen mitteilt. Dies stellt sicher, dass unmittelbar nach der Inklusion jedes Gerät Kenntnis über die Zeitbasis hat. Es ist auch möglich, dass die Zeitbasis mit einem Router synchronisiert wird. Dabei kann zunächst der Router mit dem Zentralrechner, wie beschrieben, synchronisiert werden. Der Router kennt dann die Zeitbasis des Zentralrechners und kann diese verwenden, um ein weiteres Gerät mit dieser Zeitbasis zu synchronisieren.

Wie bereits erläutert, wird vorzugsweise die Präambel um den durch die Zeitbasis und die Parameter bestimmten Zeitpunkt herum ausgesendet. Hierbei wird die Länge der Präambel vorzugsweise durch in den Geräten vorhandene Zeitschwankungen bestimmt.

Die Zeitbasis wird vorzugsweise mittels des Network-Time-Protokolls (NTP) zwischen Zentralrechner oder Router und Empfänger und/oder Sender synchronisiert.

Bei der Synchronisation der Zeitbasis wird vorgeschlagen, dass eine unmittelbare Kommunikationsverbindung zwischen dem Zentralrechner/Router und dem Empfänger bzw. dem Sender besteht. Hierdurch wird sichergestellt, dass die Signallaufzeit zwischen dem Zentralrechner/Router und dem Sender bzw. dem Empfänger auf ein Minimum reduziert ist und Verfälschungen an der Zeitbasis durch die Signallaufzeit minimiert werden.

Vorzugsweise wird ein Zeitversatz für eine Signallaufzeit berechnet. Dieser Zeitversatz wird unter anderen aus den Werten:
TO Zeitpunkt eines Sendens eines Anfragepakets;
T1 Zeitpunkt eines Empfangens eines Anfragepakets;
T2 Zeitpunkt eines Sendens eines Antwortpakets; und
T3 Zeitpunkt eines Empfangens eines Antwortpakets bestimmt.

Der "round trip delay" ergibt sich dann aus (T3-T0)-(T2-T1). Der zeitliche Versatz zwischen dem sendenden Gerät und dem empfangenden Gerät, hier beispielsweise dem Zentralrechner und dem Empfänger, ergibt sich dann zu ½ ((T1-T0)+(T2-T3)). Dieser Zeitversatz wird berücksichtigt bei der Bestimmung der Zeitbasis in dem Sender bzw. dem Empfänger, der von dem Zentralrechner die Zeitbasis empfängt. Von der empfangenen Zeitbasis wird der Zeitversatz abgezogen, so dass sichergestellt wird, dass Signallaufzeiten bei der Bestimmung der Zeitbasis in den entsprechenden Geräten berücksichtigt sind. Die unmittelbare Kommunikationsverbindung verhindert, dass Verzögerungen in zwischengeschalteten Geräten die Zeitbasis verfälschen.

Geräte der Heimautomatisierung können ein Zentralerechner (zentrales Steuergerät), ein Router und/oder Sensoren und/oder Aktoren sein.

Ein Sensor kann beispielsweise ein Schalter, ein Bewegungsmelder, ein Taster, ein Türkontakt, ein Thermostat, ein Fensterkontakt, ein Bildsensor, ein Helligkeitssensor, ein Temperatursensor, ein Binärsensor, ein Mikrofon, oder eine andere Einrichtung zum Erfassen von Umweltveränderungen sein.

Ein Aktor kann insbesondere ein Relais, ein Ventil, ein Motor, ein Stellmotor, ein Dimmer, eine Rolladensteuerung, ein Schalter, ein Signalgeber, ein Infrarotsignalgeber, ein akustischer Signalgeber, ein Bedienteil, ein Informationsterminal oder ein sonstiges Gerät zum Durchführen von Schaltvorgängen, Steuervorgängen, Regelvorgängen oder sonstigen Aktionen und/oder zum Ausgeben von Informationen und Zuständen sein.

Ein zentrales Steuergerät (Server, Smart Home Controller SHC) kann ein zentral angeordneter Rechner sein, der Steuerfunktionen übernimmt. Dieser kann Parameter für die Konfiguration von Sensoren und Aktoren überarbeiten und aussenden. Der Server kann beispielsweise mit einem Weitverkehrsnetz verbunden sein. Hierbei ist es beispielsweise möglich, dass der Server über einen entsprechenden Router mit einem Weitverkehrsnetz, beispielsweise einem TCP/IP basiertes Weitverkehrsnetz verbunden ist. Insbesondere kann es möglich sein, auf den Server über das Weitverkehrsnetz zuzugreifen und aus der Ferne Konfigurationen vorzunehmen. Der Server kann dergestalt sein, dass er lediglich zu Konfigurationszwecken mit Sensoren und Aktoren kommuniziert.

Das Heimautomatisierungssystem kann darüber hinaus so ausgelegt sein, dass eine Kommunikation zwischen Sensoren und Aktoren zur Steuerung in Reaktion auf Ereignisse erfolgt, ohne dass der Server zwischengeschaltet ist. Hierdurch lässt sich eine autarke Heimautomatisierung realisieren, die auch ohne einen Server funktioniert. Dies ist jedoch nur dann sicher möglich, wenn ein Netzwerkschlüssel für die Verschlüsselung von Kommunikation bei den Geräten bekannt ist. Eine Kommunikation zwischen einem Sensor und einem Aktor wird beispielsweise bei einem Ereignis an einem Sensor notwendig, bei welchem Ereignis der Aktor eine Aktion durchführen soll.

Am Eingang des Gerätes kann gegenständlich ein Ereignis detektiert werden. Ein Ereignis kann eine Benutzerinteraktion, beispielsweise das Betätigen eines Schalters oder Tasters, eine Veränderung von Umweltbedingungen, eine Bewegung, ein Öffnen eines Fensters, eine Temperaturänderung oder eine sonstige Veränderung von Umgebungsbedingungen sein.

Beim Detektieren eines Ereignisses kann das Gerät, bevorzugt ein eingespeistes (akkumulatorbetriebenes) Gerät, aufwachen und in einen Aktivmodus versetzt werden. Gegenständlich ist es möglich, dass das Gerät im Normalzustand in einem Ruhezustand (Schlafmodus) ist. In diesem Ruhezustand wird lediglich der Eingang auf das Auftreten eines Ereignisses überwacht. Sämtliche weitere Funktionen können entweder deaktiviert oder mit einer minimalen Leistungsaufnahme aufrechterhalten werden. Insbesondere kann die Kommunikation über eine Kommunikationsschnittstelle in diesen Zeiträumen ruhen, so dass weder Signale ausgesendet, noch Signale empfangen werden.

Beim Detektieren eines Ereignisses kann das Gerät erwachen (in den Aktivmodus wechseln), derart, dass der Prozessor aktiviert wird und die Kommunikationsschnittstelle zur Kommunikation mit der Außenwelt aktiviert wird. Das Gerät wird zum Sender und versucht, in den Nutzdaten eine Nachricht (z.B. einen Steuerbefehl) an ein weiteres Gerät zu übertragen. Dieses weitere Gerät kann ein Aktor sein. Auch dieses weitere Gerät kann sich in einem Schlafmodus befinden. Um dieses weitere Gerät "aufzuwecken" wird das oben beschriebene Senden der Erkennungsbitfolge und das zeitweise Aufwachen des Empfängers vorgeschlagen.

Der Prozessor kann beispielsweise ein digitaler Signalprozessor (DSP) sein. Auch kann der Prozessor ein Mikrocontroller sein. Der Prozessor kann ein beliebiger Mikroprozessor sein, der zum Einen zum Auswerten von Eingangssignalen und zum Anderen zum Ausgeben von Steuerungssignalen eingerichtet ist.

Die Kommunikationsschnittstelle kann beispielsweise eine Einrichtung zur Kommunikation über ein Drahtlosnetzwerk sein. Auch kann die Kommunikationsschnittstelle über ein drahtgebundenen Netzes kommunizieren. Beispielsweise kann eine Kommunikation über LAN, WLAN, Bluetooth oder dergleichen erfolgen. Insbesondere kann die Kommunikationsschnittstelle beispielsweise bei einer Frequenz von 868Mz mit einem Frequenz Shift Key Nachrichten aussenden. Insbesondere sind Datenraten von 100KB/s möglich.

Die Kommunikation mittels der Kommunikationsschnittstelle kann eine bidirektionale Kommunikation auf einem Bus, insbesondere einem Funkbus sein. Die Kommunikationsschnittstelle kann zur Verschlüsselung der übertragenen Daten eingerichtet sein. Die Kommunikation über die Kommunikationsschnittstelle kann im Multicast als auch im Unicast Modus erfolgen.

Die zuvor genannten Verfahren können auch als Computerprogramm oder als auf einem Speichermedium gespeichertes Computerprogramm realisiert werden. Hierbei kann sensorseitig, aktorseitig und/oder serverseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein. Auch die in der Beschreibungseinleitung genannten Merkmale lassen sich in erfinderischer Weise mit den Merkmalen der unabhängigen und abhängigen Ansprüche kombinieren.

Nachfolgend wird der Gegenstand anhand einer Ausführungsbeispiele zeigenden Zeichnung näher erläutert.
- Fig. 1: zeigt schematisch ein Gerät, das als Sensor gebildet ist;
- Fig. 2: zeigt schematisch ein Gerät, das als Aktor gebildet ist;
- Fig. 3: zeigt einen schematischen Aufbau eines Heimautomatisierungssystems;
- Fig. 4: zeigt einen beispielhaften zeitlichen Ablauf einer Einbindung und einer Konfiguration eines Aktors 12 sowie eines Sensors 2;
- Fig. 5: zeigt einen beispielhaften zeitlichen Ablauf eines Wakeup-Bursts bei nicht gegenständlich konfigurierten Geräten;
- Fig. 6: zeigt einen beispielhaften zeitlichen Ablauf eines Wakeup-Bursts bei gegenständlich konfigurierten Geräten;
- Fig. 7: zeigt einen beispielhaften zeitlichen Ablauf einer Kommunikation zwischen Aktor 12, Sensor 2 und Steuerrechner 22;

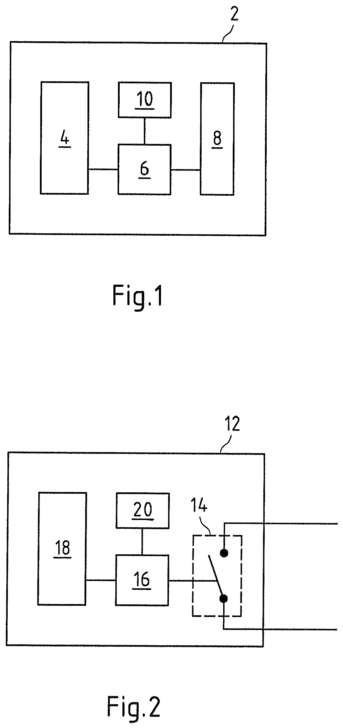

Fig. 1 zeigt schematisch einen Sensor 2 mit einem Tasterfeld 4, welches als Eingang zum Detektieren von Ereignissen verwendet wird. In dem Sensor 2 ist darüber hinaus ein Prozessor 6 angeordnet, zum Auswerten der detektierten Ereignisse an dem Tasterfeld 4. In dem Sensor 2 ist auch eine Funkschnittstelle 8 vorgesehen, welche über den Prozessor 6 angesteuert wird. Mittels der Funkschnittstelle 8 ist es möglich, über ein Funkprotokoll Nachrichten auszusenden und zu empfangen. Die Funkschnittstelle 8 ermöglicht eine Kommunikation über eine Luftschnittstelle. Mittels der Funkschnittstelle 8 ist eine Kommunikation nach einem Burst-Wakeup Verfahren, wie es beansprucht ist, und nachfolgend beschrieben wird, möglich.

Ferner ist in dem Sensor 2 ein Speicher 10 angeordnet. In dem Speicher 10 können temporäre Schlüssel und Netzwerkschlüssel gespeichert werden. Mit Hilfe des Sensors 2 ist es möglich, Ereignisse zu erfassen und in entsprechende Nachrichten umzusetzen.

Der Sensor 2 ist energetisch eigengespeist und ist regelmäßig in einem Schlafmodus. Nur bei einem Ereignis wacht der Sensor 2 auf und überträgt Nutzdaten nach einem gegenständlichen Burst-Wakeup Verfahren, wie nachfolgend beispielhaft beschrieben. Der Sensor 2 kann aber auch ein Nachrichtenempfänger sein, so dass der Sensor 2 auch während des Schlafmodus regelmäßig in einem Aufwachintervall kurzzeitig überprüft, ob eine Burst-Präambel gesendet wird.

Fig. 2 zeigt einen Aktor 12. Der Aktor 12 weist einen Ausgang 14 auf, über den beispielsweise elektrische Verbraucher gesteuert werden können. Zu erkennen ist, dass in dem dargestellten Beispiel der Ausgang 14 mit einem Schalter verbunden ist, über den elektrische Kontakte am Ausgang 14 kurz geschlossen oder getrennt werden können. Der Ausgang 14 bzw. der Schalter wird über einen Prozessor 16 angesteuert, der ebenfalls in dem Aktor 12 angeordnet ist. Der Prozessor 16 ist mit einer Funkschnittstelle 18 verbunden. Über die Funkschnittstelle 18 können Daten über die Luftschnittstelle beispielsweise mit der Funkschnittstelle 8 als auch mit einem zentralen Server ausgetauscht werden. Die Funkschnittstelle 8 ermöglichst es dem Aktor 12, Daten zu senden und zu empfangen.

Der Aktor 12 ist energetisch eigengespeist und ist regelmäßig in einem Schlafmodus. Während des Schlafmodus wacht der Aktor regelmäßig in einem Aufwachintervall kurzzeitig auf und überprüft, über eine Burst-Präambel gesendet wird. Wenn keine solche Präambel empfangbar ist, kehrt der Aktor 12 wieder in den Schlafmodus zurück. Anderenfalls ist der Aktor 12 eingerichtet, die Nutzdaten zu empfangen und auszuwerten.

Schließlich ist in dem Aktor 12 ein Speicher 20 angeordnet, in dem temporäre Schlüssel und Netzwerkschlüssel gespeichert sein können.

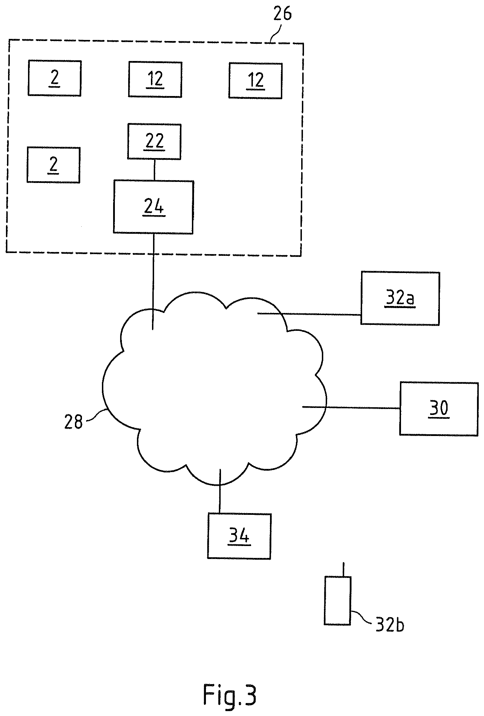

Die in Fig. 1 und 2 gezeigten Sensoren 2 und Aktoren 12 lassen sich in einem in Fig. 3 gezeigte Heimautomatisierungssystems einsetzen. Fig. 3 zeigt beispielsweise die Umgebung 26 eines Hauses oder einer Wohnung. In dieser Umgebung 26 ist ein Router 24 vorgesehen, der eine Kommunikationsverbindung mit dem Internet 28 zur Verfügung stellt und Datenpakete in das Internet 28 aussendet und aus dem Internet 28 empfangen kann. An den Router 24 ist ein Server 22 (Smart Home Controller SHC) angeschlossen. Über den Router 24 kann der SHC 22 Datenpakete mit dem Internet 28 austauschen. Der SHC 22 kann über eine Funkverbindung eine Kommunikation mit den Sensoren 2 als auch den Aktoren 12 aufbauen. Die Kommunikation kann bidirektional sein und auf Anforderungen erfolgen.

An das Internet 28 ist eine zentrale Verwaltungseinheit 30 angeschlossen. Die zentrale Verwaltungseinheit 30 kann über das Internet 28 und den Router 24 eine Kommunikation mit dem SHC 22 aufnehmen, um beispielsweise eine Konfiguration der Sensoren 2, der Aktoren 12 oder des SHCs 22 vorzunehmen.

Die Konfiguration des SHCs 22 als auch der Sensoren 2 und der Aktoren 12 über das Internet 28 kann beispielweise von einem privaten Personalcomputer 32a erfolgen. Hierzu kann der Personalcomputer 32a beispielsweise eine Verbindung über das Internet 28 mit der zentralen Verwaltungseinheit 30 aufbauen und mittels der zentralen Verwaltungseinheit 30 eine Konfiguration des SHCs 22, des Sensors 2 oder des Aktors 12 vornehmen. Diese Konfigurationsänderung kann dann über das Internet 28 von der zentralen Verwaltungseinheit 30 über den Router 24 zu dem SHC 22 übermittelt werden. Auch kann eine Konfiguration beispielsweise über ein Mobiltelefon 32b erfolgen, wobei das Mobiltelefon 32b über einen Gateway 34 mit dem Internet 28 verbunden ist und über das Gateway 34 eine Verbindung mit der zentralen Verwaltungseinheit 30 aufnehmen kann.

Eine sichere Kommunikation zwischen dem SHC 22 und der zentralen Verwaltungseinheit 30 kann beispielsweise dadurch gewährleistet sein, dass der SHC 22 mittels des Routers 24 einen Kommunikationstunnel durch das Internet 28 mit der zentralen Verwaltungseinheit 30 aufbaut, sobald der SHC 22 mit dem Router 24 verbunden wird. Hierzu muss der SHC 22 lediglich die feste IP-Adresse der zentralen Verwaltungseinheit 30 kennen und mittels eines Kennworts und eines Schlüssels die Kommunikation mit der zentralen Verwaltungseinheit 30 verschlüsseln. Über diese verschlüsselte Verbindung kann nun von der zentralen Verwaltungseinheit 30 eine Konfiguration des SHCs 22, des Sensors 2 als auch des Aktors 12 erfolgen. Die Konfiguration kann von dem Personalcomputer 32a oder dem Mobiltelefon 32b gesteuert werden. Auch ist es möglich, mittels des Personalcomputers 32a als auch des Mobiltelefons 32b Ereignisse am Sensor 2 zu generieren, um somit bestimmte Aktionen der Aktoren 12 auszulösen. Auch können Status von den Sensoren 2 und den Aktoren 12 so abgefragt werden.

Die Kommunikation zwischen SHC 22, Aktoren 12 und Sensoren 2 ermöglicht zum Einen die Konfiguration der Sensoren 2 und der Aktoren 12 als auch die Steuerung von an den Aktor 12 angeschlossenen elektrischen Verbrauchern mittels der Sensoren 2. Die Aktor-Steuerung wird durch Verknüpfungen zwischen einem Sensor 2 und Aktoren 12 als auch durch Sensor-Parameter und/oder Aktor-Parameter reguliert.

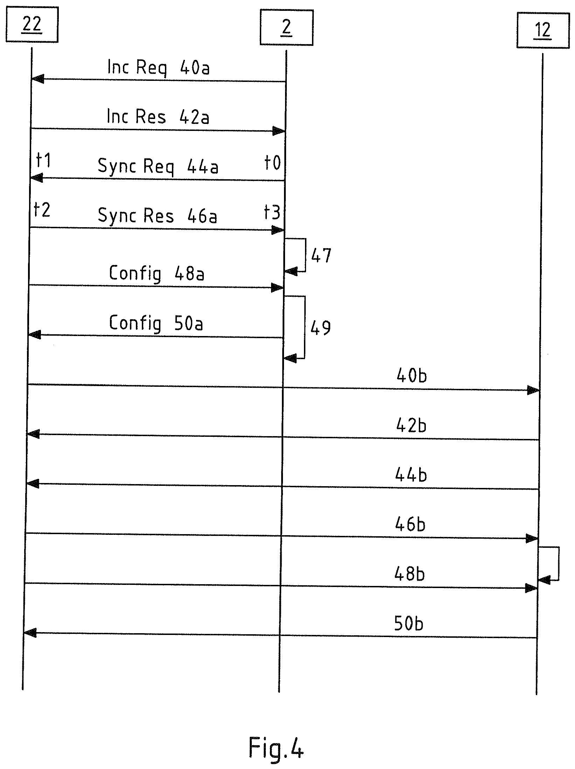

Fig. 4 zeigt in stark vereinfachter Darstellung die Einbindung sowie die Zeitsynchronisation als auch die Konfiguration von Sensoren 2 und Aktoren 12 mittels Kommunikation mit dem SHC 22.

Zu Beginn einer Einbindung eines Sensors 2 in ein Heimautomatisierungssystem ist es notwendig, den Sensor 2 am SHC 22 anzumelden. Dies kann beispielsweise dadurch geschehen, dass nachdem dem der Sensor 2 aktiviert wurde, dieser eine Inclusion-Reguest-Nachricht 40a an den SHC 22 übermittelt. Abhängig von Nutzeraktionen am SHC 22 kann die Einbindungsanfrage mittels einer Inclusion-Response-Antwort 42a bestätigt werden. Hierbei können neben Parametern für den Sensor 2 auch Netzwerkschlüssel zur gesicherten Kommunikation und weitere Informationen für den Sensor 2 zur Kommunikation in dem Heimautomatisierungssystem ausgetauscht werden.

Anschließend kann eine Zeitsynchronisation stattfinden. Diese wird vorzugsweise mittel des NTP-Protokolls durchgeführt. In Fig. 4 ist die Zeitsynchronisation vereinfacht dargestellt.

In dem Sensor 2 ist eine noch nicht synchronisierte Zeit TO bekannt. Zu diesem Zeitpunkt sendet der Sensor 2 einen Synchronisations-Request 44a an den SHC 22. Diese Nachricht 44a wird in dem SHC 22 zum Zeitpunkt T1 empfangen. Der SHC 22 verarbeitet diese Nachricht 44a und ermittelt seine Zeitbasis anhand eines im SHC 22 vorhandenen Zeitgebers. Der SHC 22 übermittelt zu einer Zeit T2 eine Synchronisations-Response-Nachricht 46a an den Sensor 2. In dieser Nachricht 46a ist eine Zeitinformation des Zeitgebers des SHC 22 enthalten sowie Informationen, wie die Zeitbasis, beispielsweise einen Zeitnullpunkt, ist. Die Nachricht 46a wird zum Zeitpunkt T3 in dem Sensor 2 empfangen. Der Sensor 2 ermittelt aus der Nachricht die Zeitbasis und kann eine Laufzeit anhand der Zeiten T0, T1, T2 und T3 ermitteln. Diese Zeitinformationen sind vorzugsweise ebenfalls in der Nachricht 46a enthalten. Wie oben bereits erläutert, kann der Sensor 2 somit eine mittlere Laufzeit für die Signale 44a und 46a ermitteln und somit die empfangene Zeitbasis um die Laufzeit korrigieren. Dies erfolgt in einem Schritt 47. Im Anschluss an den Schritt 47 ist in dem Sensor 2 eine Zeitbasis konfiguriert.

Zur Parametrierung des Sensors 2, insbesondere zur Bestimmung eines Zeitversatzes, eines Intervalls als auch eines Funkkanals kann ebenfalls stark vereinfacht dargestellt, der SHC 22 eine Configuration- Nachricht 48a an den Sensor 2 übermitteln. In dieser Nachricht können neben den Parametern weitere Informationen, beispielsweise über zu dem Sensor 2 zugeordnete Aktoren 12 als auch über Steuerregeln und dergleichen enthalten sein. In einem Schritt 49 speichert der Sensor 2 die in der Nachricht 48a enthaltenden Informationen und bestätigt dem SHC 22 in einer Configuration-Nachricht 50a den Empfang der Nachricht 48a.

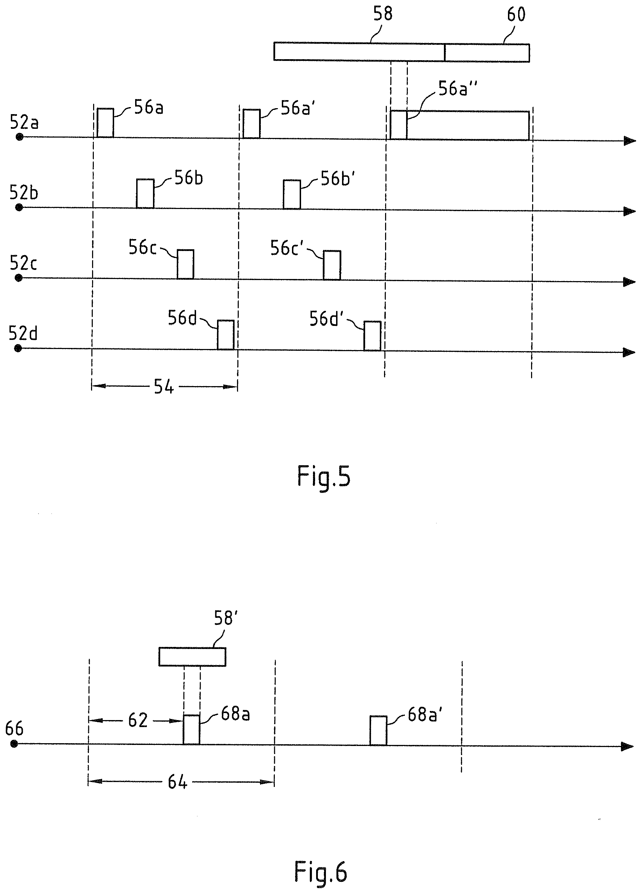

Im Anschluss an den Schritt 49 ist der Sensor 2 zum Empfang von Nachrichten konfiguriert und kann in einen Energiesparmodus treten. Nur beim Eintritt eines äußeren Ereignisses, beispielsweise durch eine Benutzeraktion, beispielsweise an einem Taster, kann der Sensor 2 aktiviert werden. Ansonsten lauscht der Sensor 2 zu den durch die empfangenen Parameter bestimmten Zeiten kurzzeitig auf dem Funkkanal und kehrt danach unmittelbar wieder in den Schlafmodus zurück. Zu den definierten Zeiten kann der Sensor 2 von dem SHC 22 Nachrichten empfangen, wie das nachfolgend in der Fig. 6 noch beschrieben werden wird.

Eine Inkludierung als auch eine Konfiguration und eine Synchronisation mit einer Zeitbasis zwischen einem SHC 22 und einem Aktor 12 ist in der Fig. 4 in den Schritten 40b-50b dargestellt, die den Schritten 40a-50a entsprechen. Im Unterschied zu den Schritten 48a und 50a wird jedoch in den Schritten 48b und 50b eine andere Konfigurationsinformation an den Aktor 12 übermittelt. Ansonsten ist die stark vereinfachte dargestellte Kommunikation in Fig. 4 geeignet, sowohl den Sensor 2 als auch den Aktor 12 zum einen auf eine Zeitbasis zu synchronisieren und zum anderen mit Parametern zum bestimmen einer Zeit, zu der gelauscht werden muss, zu parametrieren. Ferner ist dieser Ablauf geeignet, Sensor 2 als auch Aktor 12 zu konfigurieren um entsprechende Aktionen und Reaktionen auf Nachrichten und Nutzeraktionen auszulösen. Die Kommunikation mittels eine Wakeup-Bursts bei nicht parametrierten Geräten ist in Fig. 5 gezeigt. Fig. 5 zeigt vier Funkkanäle 52a-d. Jeder Funkkanal 52a-d ist durch ein Frequenzband bestimmt und ermöglicht die Kommunikation mittels Kommunikationssignalen. Ferner ist in der Fig. 5 dargestellt, dass ein Empfänger innerhalb eines Default-Intervalls 54 jeweils zu kurzen Zeiten 56a-56d auf einem jeweiligen Funkkanal 52a-52d lauscht. Dieses Lauschen erfolgt auf allen Funkkanälen 52a und derart, dass innerhalb des Default-Intervalls 54 alle Funkkanäle 52a-d einmal belauscht werden.

In diesem Zustand ist es für einen Sender notwendig, ein Wakeup-Burst 58 zumindest über die Dauer des Default-Intervalls 54 auf einem der Funkkanäle 52a-52d zu übermitteln, um sicherzustellen, dass der Wakeup-Burst 58 auf dem einen der Funkkanäle 52a-52d tatsächlich empfangen wird. Im gezeigten Beispiel wird der Wakeup-Burst 58 auf dem Funkkanal 52a übermittelt. Zu dem Zeitpunkt 56a' lauscht der Empfänger auf dem Funkkanal 52a. Zu diesem Zeitpunkt ist noch kein Wakeup-Burst 58 auf dem Funkanal 52a zu hören. Anschließend lauscht der Empfänger auf den Funkkanälen 52b-52d zu den Zeiten 56b'-56d' und empfängt dort ebenfalls keinen Wakeup-Burst 58. Erst zu dem Zeitpunkt 56a", zu dem der Empfänger wieder auf dem Funkkanal 52a lauscht, empfängt dieser den Wakeup-Burst 58 und kann in einen Funkmodus wechseln, in dem Nutzdaten 60 übertragen werden können.

In dem in Fig. 5 gezeigten Beispiel ist es nachteilig, dass der Wakeup-Burst 58 über die Dauer eines Default-Intervalls 54 gesendet werden muss, um sicherzustellen, dass der Empfänger diesen Wakeup-Burst 58 auch tatsächlich empfängt. Dies führt zu einem erhöhten Stromverbrauch im Sender.

Um das Verfahren zu beschleunigen, wird vorgeschlagen, Sender und Empfänger mit Parameters Intervall, Zeitversatz und Funkkanal zu parametrieren.

Zu Beginn kann ein Gerät auf zumindest einer von zwei fest programmierten Inklusionsfrequenzen ein Inclusion-Request senden. Vorzugsweise empfängt der zentrale Steuerrechner auf der Inklusionsfrequenz den Inclusion-Request des Gerätes. Daraufhin kann das Gerät über die Inklusionsfrequenz mit dem zentralen Steuerrechner synchronisiert werden. Im Anschluss kann das Gerät zu den definierten Parametern Intervall und Zeitversatz entweder auf den Inklusionsfrequenzen oder einer von zumindest vier definierten Datenkanalfrequenzen auf einen Wakup-Bursts lauschen.

Nachdem die Zeitbasis als auch die weiteren Parameter wie Intervall, Zeitversatz und Funkkanal in dem Sender 2 als auch dem Aktor 12 parametriert wurden, wie in Fig. 4 dargestellt, ist das Aufwecken eines Aktors 12 mit erheblich weniger Energieverbrauch verbunden, wie in der Fig. 6 gezeigt ist. In Fig. 6 ist gezeigt, dass ein Zeitversatz 62 als auch ein Intervall 64 sowie ein Funkkanal 66 in einem Empfänger als auch einem Sender parametriert sein kann. Mittels des Funkkanals 66 wird bestimmt, auf welchem Funkkanal der Empfänger lauscht. Mittels des Zeitversatzes 62 wird bestimmt, mit welchem Versatz zur Zeitbasis der Empfänger lauscht und mittels des Intervalls 64 wird bestimmt, in welchen Zeitabständen der Empfänger auf dem bestimmten Kanal lauscht. Gezeigt ist, dass der Empfänger zu den Zeiten 68a, 68a' und folgenden lauscht.

Da sowohl im Aktor 12 als auch im Sensor 2 die Informationen zu Funkkanal 66, Zeitversatz 62 und Intervall 64 bekannt sind, kann der Sensor 2 einen erheblich verkürzten Wakeup-Burst 58' aussenden. Der Wakeup-Burst 58' wird im Sensor 2 zu einem bestimmten Zeitpunkt ausgesendet, der sich aus dem Zeitversatz 62 und dem Intervall 64 ergibt. Ferner wird der Wakeup-Burst 58' lediglich auf dem Funkkanal 66 ausgesendet. Der Sensor 2 weiß, dass der entsprechende Empfänger zu dem berechneten Zeitpunkt auf dem Funkkanal 66 lauscht. Darüber hinaus wird mittels einer Verlängerung des Wakeup-Burst 58' sichergestellt, dass einem Jitter hinsichtlich der Zeitinformation im Sensor 2 als auch im Aktor 12 Rechnung getragen wird.

Der Zeitgeber sowohl im Sensor 2 als auch im Aktor 12 ist eventuell temperatur- oder alterungsabhängig was dazu führen kann, dass die Zeitinformationen zwischen Sensor 2 und Aktor 12 variiert. Um dieser Variation Rechnung zu tragen, wird zu Beginn als auch zum Ende des errechneten Zeitpunkts die Burst-Präambel verlängert. Die Verlängerung ergibt sich aus der Dauer des angenommenen maximalen Zeitversatzes.

Mit Hilfe des in Fig. 6 gezeigten Verfahrens ist es möglich, dass ein Sensor 2 lediglich einen verkürzten Wakeup-Burst 58' aussenden muss, um einen Aktor 12 aufzuwecken.

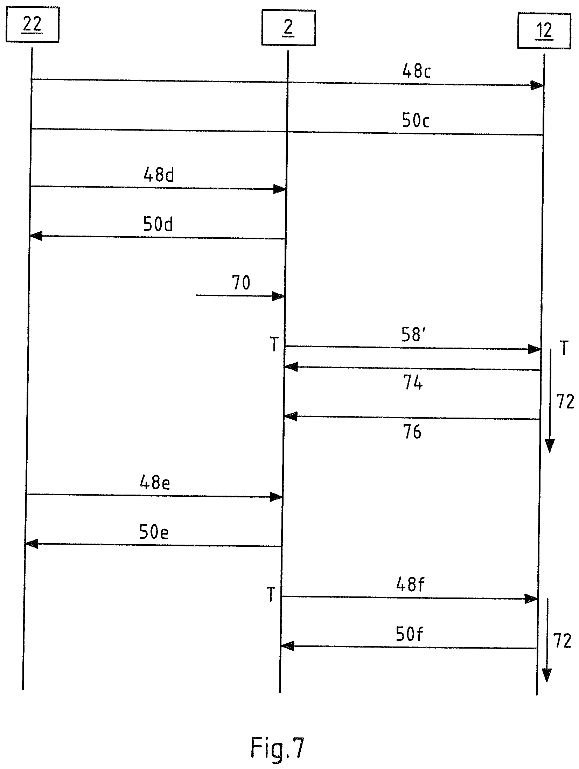

Fig. 7 zeigt einen weiteren Ablauf von Nachrichten zwischen Sensor 2, Aktor 12 und SHC 22. Schematisch dargestellt ist, dass beispielsweise in einem SHC 22 ein Aktor 12 einem Sensor 2 zugeordnet wird und in dem Aktor 12 als auch dem Sensor 2 bestimmte Aktionen und Reaktionen auf eine Nutzeraktion 70 definiert werden. Die so definierten Aktionen und Reaktionen als auch die Zuordnung des Aktors 12 zu dem Sensor 2 wird in einer Konfigurations-Request-Nachricht 48c an den Aktor 12 übermittelt und dieser bestätigt diese mit einer Nachricht 50c. Die Konfigurationsdaten für den Sensor 2 werden in einer Konfigurationsnachricht 48d an den Sensor 2 übermittelt und dieser bestätigt diese in einer Nachricht 50d gegenüber dem SHC 22. Anschließend sind sowohl Sensor 2 als auch Aktor 12 parametriert und konfiguriert, so dass diese zusammen arbeiten können.

Im Anschluss daran kann eine Nutzeraktion 70 erfolgen, beispielsweise das Drücken eines Tasters an dem Sensor 2. Der Sensor 2 weiß, dass bei der Nutzeraktion 70 der Aktor 12 angesprochen werden muss. Da der Sensor 2 ferner die Parameter als auch die Zeitbasis des Aktors 12 kennt, kann der Sensor 2 den Zeitpunkt T bestimmen, zu dem der Wakeup-Burst 58' gesendet werden muss. Ferner weiß der Sensor 2, auf welchem Funkkanal 66 der Wakeup-Burst 58' übermittelt werden muss, um den Aktor 12 aufzuwecken. Somit übermittelt der Sensor 2 zum errechneten Zeitpunkt T bzw. kurz davor, wie in Zusammenhang mit Fig. 6 beschrieben, den Wakeup-Burst 58' an den Aktor 12. Der Aktor 12 lauscht auf dem definierten Funkkanal 66 ebenfalls zum Zeitpunkt T und wird vom Energiesparmodus in den Funkmodus im Schritt 72 versetzt. Im Anschluss an den Wakeup-Burst 58' können Nutzdaten übertragen werden und diese können zu Aktionen am Aktor 12 führen. Der Aktor 12 bestätigt zum einen den Empfang der Nutzdaten in einer Nachricht 74 sowie die Ausführung der entsprechenden Aktion in einer Nachricht 76 gegenüber dem Sensor 2.

Der Sensor 2 wechselt danach wieder in den Energiesparmodus.

Bei einer Konfigurationsänderung ist es beispielsweise auch möglich, dass der SHC 22 eine Konfigurationsnachricht 48e an den Sensor 2 übermittelt. Dies kann ebenfalls zu einer bestimmten Zeit erfolgen, die durch den Zeitversatz und die Zeitbasis in dem Sensor 2 bestimmt ist und dem SHC 22 bekannt ist. Der Sensor 2 kann die Nachricht 48e in einer Nachricht 50e bestätigen. In der Nachricht 48e können Informationen enthalten sein, die eine Umkonfiguration des Aktors 12 enthalten. Diese Umkonfiguration wird dem Aktor 12 durch den Sensor 2 wiederum zum Zeitpunkt T der abhängig von der Zeitbasis, dem Zeitversatz und dem Intervall ist, auf dem definierten Funkkanal in einer Konfigurationsnachricht 48f mitgeteilt und vom Aktor 12 in einer Nachricht 50f gegenüber dem Sensor 2 bestätigt.

Mit Hilfe des verkürzten Wakeup-Bursts, der zumindest die Präambel enthält, ist es möglich, einen Sensor der als Sender fungiert, ressourcenschonend zu betreiben. Gegenüber herkömmlichen Verfahren ist es nicht mehr notwendig, den Wakeup-Burst über ein gesamtes Intervall auszusenden, sondern durch eine Zeitsynchronität zwischen Sender und Empfänger kann der Wakeup-Burst zu einem bestimmten Zeitpunkt ausgesendet werden.

## Patentansprüche

1. Heimautomatisierungssteuerungssystem mit:
- einem ein von einem Sender (2) ausgesendeten Kommunikationssignal empfangenden Empfänger, wobei der Empfänger in einem Energiesparbetrieb zum Empfangen des Kommunikationssignals nur zeitweise auf einem Funkkanal (52a-52d, 66) lauscht,
**dadurch gekennzeichnet,**
- **dass** der Empfänger auf eine Zeitbasis mit dem Sender synchronisiert ist,
- **dass** ausgehend von der Zeitbasis zumindest ein Zeitversatz (62) im Empfänger parametriert ist, und
- **dass** der Empfänger im Energiesparbetrieb nur zu Zeiten auf dem Funkkanal lauscht, die zumindest durch die Zeitbasis und den Zeitversatz definiert sind, wobei
- zwei fest definierte Inklusionskanäle im Sender und Empfänger bekannt sind und Sender und Empfänger über die Inklusionskanäle zumindest die Zeitbasis und den Zeitversatz austauschen.

2. Heimautomatisierungssteuerungssystem nach Anspruch 1, **dadurch gekennzeichnet, dass** in dem Empfänger zumindest ein eine Dauer zwischen zwei Zeiten zu denen der Empfänger auf dem Funkkanal lauscht bestimmendes Intervall und/oder ein Funkkanal auf dem der Empfänger lauscht, parametriert ist.

3. Heimautomatisierungssteuerungssystem nach Anspruch 1 oder 2, **dadurch gekennzeichnet, dass** der Empfänger bei einem Detektieren eines Kommunikationssignals beim Lauschen auf dem Funkkanal in einen Funkbetrieb umschaltet.

4. Heimautomatisierungssteuerungssystem nach Anspruch 3, **dadurch gekennzeichnet, dass** der Empfänger im Funkbetrieb zunächst die Datenrate des Kommunikationssignals und/oder eine in dem Kommunikationssignals codierte enthaltene Adresse und/oder ein in dem Kommunikationssignals enthaltenes Synchronisierungswort prüft.

5. Heimautomatisierungssteuerungssystem nach Anspruch 4, **dadurch gekennzeichnet, dass** der Empfänger bei einer positiven Prüfung der Datenrate des Kommunikationssignals und/oder der in dem Kommunikationssignal codiert enthaltenen Adresse und/oder dem in dem Kommunikationssignal enthaltenen Synchronisierungswort einen Steuerungsbefehl in dem Kommunikationssignal empfängt und auswertet.

6. Heimautomatisierungssteuerungssystem nach Anspruch 4 oder 5, **dadurch gekennzeichnet, dass** der Empfänger bei einer negativen Prüfung der Datenrate des Kommunikationssignals und/oder der in dem Kommunikationssignal codiert enthaltenen Adresse und/oder dem in dem Kommunikationssignal enthaltenen Synchronisierungswort aus dem Funkbetrieb in den Energiesparbetrieb wechselt.

7. Heimautomatisierungssteuerungssystem nach einem der Ansprüche 1 bis 6, **dadurch gekennzeichnet, dass** der Sender die einem Empfänger zugeordneten Parameter Zeitversatz und/oder Funkkanal und/oder Intervall speichert und abhängig von der Zeitbasis und zumindest einem der Parameter ein Kommunikationssignal aussendet.

8. Heimautomatisierungssteuerungssystem nach einem der Ansprüche 1 bis 7, **dadurch gekennzeichnet, dass** der Sender die einem Empfänger zugeordneten Parameter Zeitversatz und/oder Funkkanal und/oder Intervall von einem Zentralrechner empfängt und/oder dass der Empfänger die ihm zugeordneten Parameter Zeitversatz und/oder Funkkanal und/oder Intervall von einem Zentralrechner empfängt.

9. Heimautomatisierungssteuerungssystem nach einem der Ansprüche 1 bis 8, **dadurch gekennzeichnet, dass** der Empfänger die Zeitbasis und/oder die Parameter bei einer Inklusion in die Kommunikation mit dem Zentralrechner von dem Zentralrechner empfängt.

10. Heimautomatisierungssteuerungssystem nach einem der Ansprüche 1 bis 9, **dadurch gekennzeichnet, dass** der Sender abhängig von zumindest der Zeitbasis und dem Zeitversatz einen Zeitpunkt bestimmt, zu dem er eine Präambel eines Kommunikationssignals aussendet und/oder dass der Sender die ausgesendete Präambel um den bestimmten Zeitpunkt herum aussendet.

11. Heimautomatisierungssteuerungssystem nach einem der Ansprüche 1 bis 10, **dadurch gekennzeichnet, dass** ein Zentralrechner zumindest zwei Empfänger einer Gruppe zuordnet und dass den Empfängern der Gruppe gleiche Parameter Zeitversatz und/oder Funkkanal und/oder Intervall zugeordnet werden.

12. Heimautomatisierungssteuerungssystem nach einem der Ansprüche 1 bis 11, **dadurch gekennzeichnet, dass** der Sender die einem Empfänger zugeordnete Gruppe und/oder die einer Gruppe zugeordneten Parameter Zeitversatz und/oder Funkkanal und/oder Intervall von einem Zentralrechner empfängt.

13. Heimautomatisierungssteuerungssystem nach einem der Ansprüche 1 bis 12, **dadurch gekennzeichnet, dass** der Empfänger und/oder Sender akkumulatorgespeist ist.

14. Verfahren zur Heimautomatisierungssteuerung bei dem:
- eine Zeitbasis von einem Zentralrechner an zumindest einen Empfänger übertragen wird,
- Parameter umfassend zumindest einen Zeitversatz (62) von dem Zentralrechner an den Empfänger übertragen werden,
- der Empfängers in einem Energiesparbetrieb betrieben wird, in dem der Empfänger zum Empfangen eines Kommunikationssignals nur zeitweise auf einem Funkkanal (52a-52d, 66) lauscht, derart dass empfängerseitig nach dem Kommunikationssignal nur zu einem Zeitpunkt gelauscht wird, der durch die Zeitbasis und zumindest den Zeitversatz bestimmt ist, wobei
- die zumindest Zeitbasis und den Zeitversatz zwischen Sender (2) und Empfänger über zwei fest definierte Inklusionskanäle ausgetauscht werden.

15. Verfahren nach Anspruch 14, **dadurch gekennzeichnet, dass** die Zeitbasis des Empfängers und/oder eines Senders zumindest bei einer Inklusion des jeweiligen Kommunikationspartners in die Kommunikation mit dem Zentralrechner synchronisiert wird.

16. Verfahren nach Anspruch 14 oder 15, **dadurch gekennzeichnet, dass** ein Kommunikationssignal eine Präambel aufweist und dass die Präambel um den bestimmten Zeitpunkt herum gesendet wird und dass die Länge der Präambel durch eine Zeitschwankung im Empfänger bestimmt wird.

17. Verfahren nach einem der Ansprüche 14 bis 16, **dadurch gekennzeichnet, dass** die Zeitbasis mittels des Network Time Protokoll zwischen Zentralrechner und Empfänger und/oder Sender synchronisiert wird.

18. Verfahren nach einem der Ansprüche 14 bis 17, **dadurch gekennzeichnet, dass** die Zeitbasis zwischen Zentralrechner oder einem Router und Empfänger und/oder Sender über eine unmittelbare Kommunikationsverbindung synchronisiert wird.

## Claims

1. Home automation control system with:
- a receiver receiving a communication signal transmitted from a transmitter (2), the receiver listening only temporarily on a radio channel (52a-52d, 66) in a power saving mode for receiving the communication signal,
**characterized in that**
- the receiver is synchronised with the transmitter on a time basis,
- starting from the time base, at least one time offset (62) is parameterized in the receiver, and
- the receiver in energy-saving mode only listens on the radio channel at times which are defined at least by the time base and the time offset, where
- two fixed inclusion channels are known in the sender and receiver and the sender and receiver exchange at least the time base and the time offset via the inclusion channels.

2. Home automation control system according to claim 1, **characterized in that** at least one interval determining a duration between two times at which the receiver listens on the radio channel and/or a radio channel on which the receiver listens is parameterized in the receiver.

3. Home automation control system according to claim 1 or 2, **characterized in that** the receiver switches to a radio mode when a communication signal is detected when listening on the radio channel.

4. Home automation control system according to claim 3, **characterised in that** in radio operation the receiver first checks the data rate of the communication signal and/or an address encoded in the communication signal and/or a synchronization word encoded in the communication signal.

5. A home automation control system according to claim 4, **characterized in that** the receiver receives and evaluates a control command in the communication signal upon a positive check of the data rate of the communication signal and/or the address encoded in the communication signal and/or the synchronization word contained in the communication signal.

6. Home automation control system according to claim 4 or 5, **characterized in that** the receiver changes from radio operation to energy-saving operation when the data rate of the communication signal and/or the address and/or the synchronization word contained in the communication signal coded in the communication signal is tested negatively.

7. Home automation control system according to one of claims 1 to 6, **characterized in that** the transmitter stores the parameters time offset and/or radio channel and/or interval assigned to a receiver and transmits a communication signal depending on the time base and at least one of the parameters.

8. Home automation control system according to one of claims 1 to 7, **characterized in that** the transmitter receives the parameters time offset and/or radio channel and/or interval assigned to a receiver from a central computer and/or **in that** the receiver receives the parameters time offset and/or radio channel and/or interval assigned to it from a central computer.

9. A home automation control system according to any of claims 1 to 8, **characterized in that** the receiver receives the time base and/or the parameters from the central computer upon inclusion in communication with the central computer.

10. Home automation control system according to any of claims 1 to 9, **characterized in that** the transmitter determines a time at which it transmits a preamble of a communication signal and/or **in that** the transmitter transmits the transmitted preamble around the determined time depending on at least the time base and the time offset.

11. Home automation control system according to one of claims 1 to 10, **characterized in that** a central computer assigns at least two receivers to a group and **in that** the receivers of the group are assigned the same parameters time offset and/or radio channel and/or interval.

12. Home automation control system according to one of claims 1 to 11, **characterized in that** the transmitter receives the group assigned to a receiver and/or the parameters time offset and/or radio channel and/or interval assigned to a group from a central computer.

13. Home automation control system according to any of claims 1 to 12, **characterized in that** the receiver and/or transmitter is accumulator-powered.

14. Home automation control method in which:
- a time base is transmitted from a central computer to at least one receiver,
- parameters comprising at least one time offset (62) are transmitted from the central computer to the receiver,
- the receiver is operated in an energy-saving mode in which the receiver listens only temporarily on a radio channel (52a-52d, 66) in order to receive a communication signal, in such a way that on the receiver side the receiver listens for the communication signal only at a time which is determined by the time base and at least the time offset, where
- the at least time base and the time offset between transmitter (2) and receiver are exchanged via two fixedly defined inclusion channels.

15. Method according to claim 14, **characterized in that** the time base of the receiver and/or of a transmitter is synchronized with the central computer at least when the respective communication partner is included in the communication.

16. Method according to claim 14 or 15, **characterized in that** a communication signal has a preamble and **in that** the preamble is transmitted around the specific time and **in that** the length of the preamble is determined by a time fluctuation in the receiver.

17. Method according to one of claims 14 to 16, **characterized in that** the time base is synchronized by means of the Network Time Protocol between central computer and receiver and/or transmitter.

18. Method according to one of claims 14 to 17, **characterized in that** the time base between central computer or a router and receiver and/or transmitter is synchronized via a direct communication link.

## Revendications

1. Système de commande de domotique, comportant :
un récepteur destiné à recevoir un signal de communication envoyé par émetteur, où en mode économie d'énergie, le récepteur détecte le signal de communication uniquement par intermittence sur un canal radio (52a-52d, 66),
**caractérisé en ce que**
le récepteur est synchronisé avec l'émetteur sur une base temporelle,
au moins un délai de temporisation est paramétré dans le récepteur en raison de cette base temporelle, et
le récepteur ne détecte le signal de communication, en mode économie d'énergie uniquement par intermittence sur les canaux radio, qui sont définis au moins par la base temporelle et le délai de temporisation, où deux canaux d'inclusion définis fixes sont connus dans l'émetteur et le récepteur et l'émetteur et le récepteur échangent au moins la base temporelle et le délai de temporisation par le canal d'inclusion.

2. Système de commande domotique selon la revendication 1, **caractérisé en ce qu'**on paramétrise dans le récepteur, au moins un intervalle déterminant une durée entre deux moments où le récepteur détecte sur le canal radio et/ou un canal radio sur lequel le récepteur détecte un signal.

3. Système de commande de domotique selon la revendication 1 ou 2, **caractérisé en ce que**, lors de la détection d'un signal de communication sur le canal radio, le récepteur commute en un mode radio.

4. Système de commande de domotique selon la revendication 3, **caractérisé en ce qu'**en mode radio, le récepteur teste d'abord le taux de données du signal de communication et/ou une adresse sous forme codée présente dans le signal de communication et/ou un terme de synchronisation présent dans le signal de communication.

5. Système de commande de domotique selon la revendication 4, **caractérisé en ce que**, en cas d'évaluation positive du taux de données du signal de communication et/ou de l'adresse codée présente dans le signal de communication et/ou du terme de synchronisation présent dans le signal de communication, le récepteur réceptionne et évalue un ordre de commande dans le signal de communication.

6. Système de commande de domotique selon la revendication 4 ou 5, **caractérisé en ce que**, en cas d'évaluation négative du taux de données du signal de communication et/ou de l'adresse codée présente dans le signal de communication et/ou du terme de synchronisation présent dans le signal de communication, le récepteur passe du mode radio au mode économie d'énergie.

7. Système de commande de domotique selon l'une quelconque des revendications 1 à 6, **caractérisé en ce que** l'émetteur enregistre le paramètre associé au récepteur, délai de temporisation et/ou canal radio et/ou intervalle, et envoie un signal de communication en fonction de la base temporelle et d'au moins un des paramètres.

8. Système de commande de domotique selon l'une quelconque des revendications 1 à 7, **caractérisé en ce que** l'émetteur reçoit le paramètre associé au récepteur, délai de temporisation et/ou canal radio et/ou intervalle, d'un ordinateur central et/ou **en ce que** le récepteur reçoit le paramètre qui lui est associé, délai de temporisation et/ou canal radio et/ou intervalle, d'un ordinateur central.

9. Système de commande de domotique selon l'une quelconque des revendications 1 à 8, **caractérisé en ce que** le récepteur reçoit de l'ordinateur central, la base temporelle et/ou le paramètre lors d'une inclusion dans la communication avec l'ordinateur central.

10. Système de commande de domotique selon l'une quelconque des revendications 1 à 9, **caractérisé en ce que** l'émetteur détermine un point temporel en fonction d'au moins la base temporelle et le délai de temporisation, point temporel où il envoie un préambule au signal de communication et/ou **en ce que** l'émetteur envoie le préambule environ au point temporel déterminé.

11. Système de commande de domotique selon l'une quelconque des revendications 1 à 10, **caractérisé en ce qu'**un ordinateur central classe au moins deux récepteurs dans un groupe et **en ce que** les récepteurs du groupe sont associés aux mêmes paramètres, délai de temporisation et/ou canal radio et/ou intervalle.

12. Système de commande de domotique selon l'une quelconque des revendications 1 à 11, **caractérisé en ce que** l'émetteur reçoit le groupe associé au récepteur et/ou le paramètre associé au groupe, délai de temporisation et/ou canal radio et/ou intervalle, d'un ordinateur central.

13. Système de commande de domotique selon l'une quelconque des revendications 1 à 12, **caractérisé en ce que** le récepteur et/ou l'émetteur est alimenté par un accumulateur.

14. Procédé de commande de domotique, dans lequel :
une base temporelle est transférée d'un ordinateur central à au moins un récepteur,
des paramètres comprenant au moins un délai de temporisation (62) sont transférés de l'ordinateur central au récepteur,
le récepteur est mis en mode économie d'énergie, dans lequel le récepteur détecte le signal de communication uniquement par intermittence sur un canal radio (52a-52d, 66), de sorte que côté récepteur, on ne détecte un signal de communication qu'à un moment temporel, qui est déterminé par la base temporelle et au moins, le délai de temporisation, où
au moins, la base temporelle et le délai de temporisation sont échangés entre l'émetteur (2) et le récepteur par deux canaux d'inclusions fixes définis.

15. Procédé selon la revendication 14, **caractérisé en ce que** les bases temporelles du récepteur et/ou d'un émetteur sont synchronisées au moins lors d'une inclusion de chaque partenaire de communication lors de la communication avec l'ordinateur central.

16. Procédé selon la revendication 14 ou 15, **caractérisé en ce qu'**un signal de communication comporte un préambule et **en ce que** le préambule est envoyé environ au moment déterminé et **en ce que** la longueur du préambule est déterminée par une variation du temps dans le récepteur.

17. Procédé selon l'une quelconque des revendications 14 à 16, **caractérisé en ce que** la base temporelle est synchronisée au moyen du Network Time Protocol entre l'ordinateur central et le récepteur et/ou l'émetteur.

18. Procédé selon l'une quelconque des revendications 14 à 17, **caractérisé en ce que** la base temporelle est synchronisée entre l'ordinateur central ou un routeur et le récepteur et/ou l'émetteur par une connexion de communication directe.
